# FASCICULE DE BREVET EUROPEEN

(11) **EP 1 758 338 B1**
(45) Date de publication et mention de la délivrance du brevet: **16.04.2008**
(21) Numéro de dépôt: 05300694.6
(22) Date de dépôt: 25.08.2005
(51) Int. Cl.: H04L 29/06

(54) **Procédé et équipement de communication sécurisé pour le traitement des paquets de données selon le mécanisme SEND**
Sicheres Kommunikationsverfahren- und gerät zur Verarbeitung von SEND-Datenpaketen
Secure communication method and equipment for processing SEND data packets

(43) Date de publication de la demande: 28.02.2007
(73) Titulaire: Alcatel Lucent, 75008 Paris (FR)
(72) Inventeur: Clevy, Laurent, 28000, CHARTRES (FR); Legras, Thierry, 91460, Marcoussis (FR)
(74) Mandataire: Chaffraix, Sylvain

(56) Documents cités:
- US-A1- 2005 011 365
- ARKKO J ET AL: "SEcure Neighbor Discovery (SEND)" IETF STANDARD, INTERNET ENGINEERING TASK FORCE, IETF, CH, mars 2005 (2005-03), XP015009743 ISSN: 0000-0003
- NIKANDER P ET AL: "IPv6 Neighbor Discovery (ND) Trust Models and Threats" IETF STANDARD, INTERNET ENGINEERING TASK FORCE, IETF, CH, mai 2004 (2004-05), XP015009536 ISSN: 0000-0003

## Description

La présente invention concerne la gestion des paquets de données IPv6 (Internet Protocole version 6) dans un équipement de communication.

Certains de ces paquets de données sont conformes au protocole dit « *Network Discovery Protocol* » (NDP) tel que défini par le RFC 2461 de l'IETF (Internet Engineering Task Force).

Ce protocole défini des paquets d' « auto-configuration » et « *Network Discovery* » (ND) qui permettent à un équipement d'un réseau de communication IPv6 de déterminer son adresse et de connaître les différents équipements connectés sur chacun de ces liens. Ce protocole permet également à chaque équipement d'être informé des modifications survenant sur ces liens, par exemple lorsqu'un équipement « voisin » devient inaccessible. Cet équipement peut être un routeur (ou noeud), un « hôte » (c'est-à-dire un terminal), une passerelle ou n'importe quel dispositif possédant les moyens pour émettre et recevoir des paquets de données IPv6.

De plus, grâce à ce protocole, l'opérateur du réseau de communication n'a plus besoin de configurer manuellement chacun des équipements de son réseau, puisque celui-ci peut s'auto-configurer par des échanges de paquets d'auto-configuration conformes au protocole NDP.

Toutefois, il est nécessaire de sécuriser ces paquets de données afin, notamment, qu'un hôte non autorisé ne puisse se connecter au réseau de communication. Ainsi, par le protocole NDP, il est possible qu'un hôte usurpe l'identité d'un autre hôte en faisant croire à l'équipement d'accès à ce réseau qu'il possède l'interface MAC de celui-ci.

Un tel besoin est crucial dans le cas des réseaux de radiocommunication dans lesquels les hôtes sont mobiles et ne sont donc pas physiquement et statiquement connectés à des équipements d'accès.

Il est donc important de doter le protocole NDP de mécanismes de sécurité. Le RFC 3756 intitulé « *IPv6 Neighbor Discovery (ND) Trust Models and Threats* » datant de mai 2004 pose les problèmes et les requis pour la sécurisation du protocole NDP. Il souligne que les travaux antérieurs se basaient sur le protocole de sécurisation « IPsec » mais que ce protocole nécessite la détermination manuelle des clés de chiffrement. Cette étape manuelle étant peu compatible avec le caractère automatique du protocole NDP, une autre approche est nécessaire.

Cette approche est proposée par le RFC 3971 de l'IETF intitulé « *Secure Neighbor Discovery (SEND)* » et datant de mars 2005. D'un point de vue technique, le mécanisme SEND consiste à ajouter des champs contenant des informations de sécurité dans chacun des messages du protocole NDP, plus précisément à la fin de ceux-ci. Ces champs sont partiellement définis par le RFC : il s'agit des champs « RSA Signature option », « CGA option », « Timestamp option » et « Nonce option ». Toutefois les spécifications du RFC 3971 laissent ouverte la possibilité d'ajouter ultérieurement des nouveaux champs « option » afin d'enrichir encore le protocole NDP et le mécanisme SEND.

À l'heure actuelle, les premières implémentations du mécanisme SEND commencent juste à être définies. Certaines de ces implémentations se basent sur un système d'exploitation de type Unix. Il peut s'agir d'un système d'exploitation Linux, ou BSD par exemple. De façon classique, les noyaux de systèmes d'exploitation dédiés aux équipements de communication comportent une ou plusieurs piles protocolaires qui gèrent la transmission des paquets de données de façon transparente pour les applications. Ces piles protocolaires IPv6 implémentent donc les mécanismes logiciels nécessaires pour gérer le protocole NDP et le mécanisme SEND.

Une telle approche présente toutefois des inconvénients importants. Le mécanisme SEND est sujet à évolution, notamment par l'ajout de nouveaux champs « option ». Chaque évolution nécessite donc la modification du noyau du système d'exploitation. Or, la modification d'un noyau d'exploitation (ou noyau d'un système d'exploitation) est une opération complexe et donc coûteuse.

Le but de l'invention est donc de pallier ces inconvénients en proposant un équipement de communication mettant en oeuvre le mécanisme SEND de façon transparente pour le système d'exploitation. Elle intervient entre le réseau et le système d'exploitation, ce qui est évolutif et surtout moins coûteux.

L'invention a ainsi pour premier objet un procédé de sécurisation d'un équipement de communication comportant un noyau de système d'exploitation et un ensemble d'applications logicielles, ledit noyau comprenant au moins une pile protocolaire IPv6 permettant de transmettre des paquets de données entrants depuis un port d'entrée vers une application et des paquets de données sortants depuis une application (différente ou identique) vers un port de sortie, ces piles protocolaires comprenant un ensemble d'interfaces prévues pour permettre à des modules extérieurs connectés à celles-ci d'accéder aux paquets de données transmis par la ou les piles protocolaires en des points déterminés associés à ces interfaces. Le procédé se caractérise en ce que l'on connecte des modules d'entrée et de sortie respectivement à une interface d'entrée (H_{IN}) et à une interface de sortie du noyau, et en ce que les modules sélectionnent, analysent et éventuellement modifient les paquets de données du protocole NDP, conformément au mécanisme SEND, de façon transparente pour le noyau.

L'invention a également pour objet un équipement de communication, comportant un noyau de système d'exploitation et un ensemble d'applications logicielles, le noyau comprenant au moins une pile protocolaire IPv6 permettant de transmettre des paquets de données entrants depuis un port d'entrée vers une application et des paquets de données sortants depuis une application (identique ou différente) vers un port de sortie (P_{OUT}), les piles protocolaires comprenant un ensemble d'interfaces prévues pour permettre à des modules extérieurs connectés à celles-ci d'accéder aux paquets de données transmis par la ou les piles protocolaires en des points déterminés associés à ces interfaces. L'équipement de communication se caractérise en ce que des modules d'entrée et de sortie sont connectés respectivement à une interface d'entrée et à une interface de sortie et sont prévus pour sélectionner, analyser et modifier les paquets de données du protocole NDP, conformément au mécanisme SEND, de façon transparente pour le noyau.

Selon une mise en oeuvre de l'invention, le système d'exploitation est un système Linux et les points déterminés sont définis selon l'infrastructure « NetFilter ».

En outre, selon un mode de réalisation, les modules extérieurs analysent et modifient les options « CGA option » et « RSA signature » desdits paquets de données du protocole NDP ; la modification pouvant comprendre l'ajout de ces options.

De cette façon, les évolutions des mécanismes SEND peuvent être effectuées en changeant les modules d'entrée et/ou de sortie. Le noyau d'exploitation, lui, reste inchangé. Le coût de développement et de test est donc considérablement réduit.

Le comportement du noyau du système d'exploitation n'est pas impacté par les actions des modules d'entrée et/ou de sortie. Pour lui, ces actions sont transparentes.

En outre, il devient possible de procéder aux évolutions du mécanisme ou simplement au remplacement des modules par des nouveaux modules plus performants ou « débugués » directement sur l'équipement de communication, sans avoir à arrêter le système, procéder aux modifications, recompiler le noyau et relancer le système.

La présentation et ses avantages apparaîtront de façon plus claire dans la description qui va suivre en liaison avec les figures annexées.
La figure 1 schématise un équipement de communication selon l'invention.
La figure 2 illustre un mode de réalisation particulier de l'invention basé sur un système d'exploitation Linux.
La figure 3 représente un paquet du protocole NDP et mettant en oeuvre le mécanisme SEND.

Ainsi qu'évoqué précédemment, un équipement de communication peut se décomposer entre un noyau de système d'exploitation (ou, en raccourci, « noyau d'exploitation ») et des applications fonctionnant grâce à ce noyau. Le rôle du noyau est de permettre à ces applications de fonctionner indépendamment du matériel (fabriquant de l'équipement de communication, modèle, etc.) ainsi que de l'infrastructure réseau (version des protocoles réseaux, type de protocole etc.) et de faciliter le développement des applications en offrant un ensemble de « fonctions » utilisables par les applications. Ces fonctions sont accessibles aux applications grâce à des interfaces clairement définies.

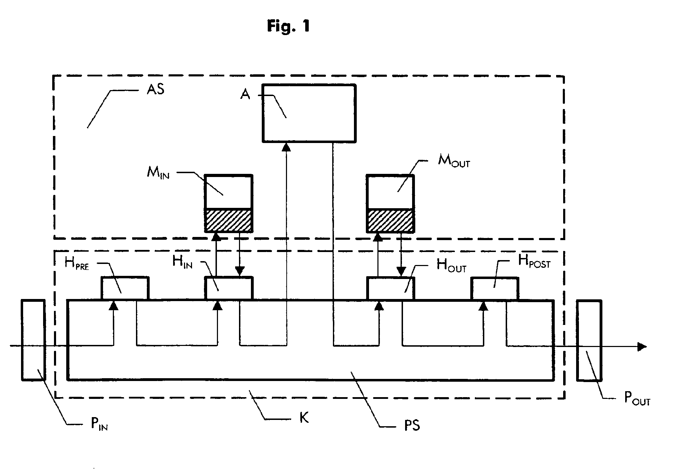

Sur la figure 1, l'équipement de communication représenté comporte donc un noyau K et un espace dédié aux applications AS (« *User space* » ou « *user land* »)

Le noyau d'exploitation K comporte une (ou plusieurs) pile protocole PS, ainsi que d'autres fonctions non représentées. Dans le cadre de l'invention, cette pile protocolaire est préférentiellement conforme au protocole IPv6 (*Internet Protocole version 6*). La pile protocole PS est connectée à d'une part un port d'entrée P_{IN} et d'autre part à un port de sortie P_{OUT}.

Les paquets de données possèdent un entête conforme au protocole IPv6 qui précise au moins l'adresse destinataire et l'adresse source.

Les paquets de données entrants sont des paquets de données qui comportent comme adresse destinataire l'adresse IPv6 de l'équipement de communication. Ces paquets entrent par le port d'entrée P_{IN} et sont transmis par la pile protocole PS jusqu'à une application A.

Une application A (la même ou une autre) peut également émettre des paquets de données. Ces paquets de données comportent alors l'adresse IPv6 de l'équipement de communication comme adresse source et ils sont transmis par la pile protocolaire jusqu'au port de sortie P_{OUT}.

La pile protocolaire PS comprend en outre un ensemble d'interfaces H_{PRE}, H_{IN}, H_{OUT}, H_{POST}. Ces interfaces sont prévues pour permettre à des modules extérieurs M_{IN}, M_{OUT} de se connecter à la pile protocolaire afin d'accéder aux paquets de données transmis par la pile protocolaire en des points déterminés associés à ces interfaces.

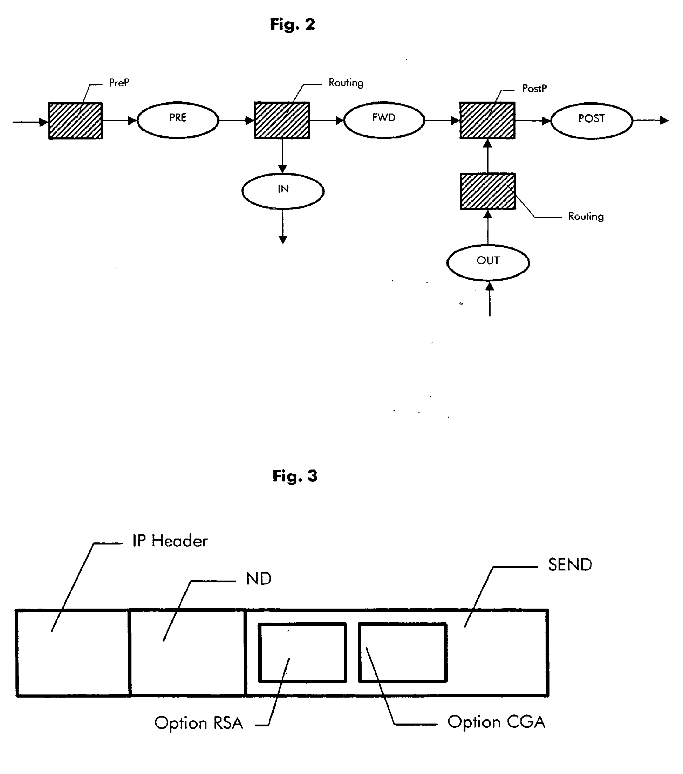

La figure 1 ne montre que 4 interfaces H_{PRE}, H_{IN}, H_{OUT}, H_{POST} mais la pile protocolaire PS peut en posséder d'autres. Ces interfaces dépendent du type de noyau d'exploitation K.
Dans une mise en oeuvre selon le noyau Linux, l'infrastructure « NetFilter » définie cinq interfaces correspondant à 5 points déterminés dans la transmission des paquets de données. L'infrastructure « NetFilter » est décrite par le site internet « www.netfilter.org » et ces cinq points sont illustrés par la figure 2.

L'invention ne saurait toutefois être limitée à cette mise en oeuvre, car elle peut s'appliquer à d'autres systèmes d'exploitation (BSD etc.) qui offrent également des points déterminés (« hook ») associés à des interfaces rendant possible l'accès aux paquets de données par des modules extérieurs.

Dans le cadre de cette mise en oeuvre basé sur le système Linux, chaque paquet de données arrivant sur un port d'entrée est d'abord l'objet d'un pré-traitement PreP. Ce pré-traitement consiste notamment à vérifier que le paquet de données est bien complet, que la valeur de vérification (« checksum ») contenu dans le paquet correspond bien aux données reçues etc. À la suite de ce pré-traitement, on trouve un premier point déterminé « PRE ».

Les paquets de données passent ensuite par un second traitement « Routing » consistant à déterminer s'ils ont pour destination l'équipement de communication ou bien s'ils doivent être retransmis sur un port de sortie. Pour ce faire, le traitement « Routing » compare l'adresse destination contenue dans chaque paquet de données avec l'adresse IPv6 de l'équipement de communication. Si ces adresses correspondent, le paquet de données arrive à un point déterminé « IN » puis il est transmis à une application destinatrice.

Si tel n'est pas le cas, il arrive à un point déterminé « FWD » signifiant qu'il doit être transmis (« ForWarD » en langue anglaise) à un autre équipement de communication.

Les paquets de données peuvent alors faire l'objet d'autres traitements « PostP » avant d'arriver au dernier point déterminé « POST » signifiant que le paquet est prêt à être transmis par un port de sortie.

Les paquets de données provenant de l'équipement de communication arrivent par un premier point déterminé « OUT ». Ils font l'objet de traitements « Routing » afin de déterminer vers où (quel port) ils doivent être émis puis d'autres traitements éventuels « PostP » avant d'aboutir au point déterminé « POST ».

Autrement dit, ces points particuliers correspondent à des « états » du traitement des paquets de données par la pile protocolaire PS, des jalons le long de leur parcours.

À ces points déterminés « PRE », « IN », « FWD », « OUT » et « POST » sont associés des interfaces, c'est-à-dire des moyens d'accès aux paquets de données par des applications (ou modules) extérieurs à la pile protocolaire. Ces interfaces sont appelées « hook » (« crochets », en langue anglaise) dans le vocabulaire propre à l'infrastructure « NetFilter ».

Les applications connectées aux interfaces de la pile protocolaire seront par la suite appelées « modules » pour les distinguer des autres applications, telles celles susceptibles d'être des points de terminaison des flux de paquets de données (comme les applications A de la figure 1).

Les modules extérieurs peuvent se connecter aux interfaces de la pile protocolaire grâce à un mécanisme de listes. À chaque interface correspondent plusieurs listes, chacune ayant une fonction précise. Plusieurs implémentations sont ici possibles, qui dépendent notamment du type de noyau utilisé (listes « mangle » et « filter » pour Linux, liste « divert » pour BSD, etc.)

Des modules extérieurs peuvent s'enregistrer auprès des listes de ces interfaces. Lorsqu'un paquet de données atteint un des points déterminés, l'infrastructure « NetFilter » est appelée. Celle-ci dispose des moyens nécessaires pour permettre aux modules extérieurs enregistrés dans ses listes d'accéder au paquet de données.

Toutefois, la demanderesse a remarqué que dans le cas du protocole NDP, l'adresse destination est de type « multi-cast » (ou « point à multipoint », en langue française) : ils adressent l'ensemble des équipements de communication abonné à ce groupe (« tous les noeuds », ou « tous les routeurs ») sur un même lien. Aussi, chaque équipement de communication abonné est destinataire de l'ensemble des paquets du protocole NDP. Par conséquent, une première sélection peut être effectuée sur le type de paquets de données qui traversera ou non l'infrastructure « NetFilter », grâce à la commande « ip6tables ». Ici, seuls les paquets de données du protocole NDP sont envoyés à l'infrastructure « NetFilter » ; les autres continuent leur chemin habituel.

De plus, afin d'optimiser le mécanisme et d'économiser les ressources, il est intéressant de ne s'intéresser qu'aux points déterminés « IN » et « OUT » et à leurs interfaces associées.

Si on revient à la figure 1, deux modules extérieurs M_{IN} et M_{OUT} sont donc connectés respectivement aux interfaces (ou « hook ») H_{IN} et H_{OUT}. Pour utiliser ces interfaces, les modules extérieurs utilisent les fonctions offertes par la librairie « libipq ». Le code correspondant à ces fonctions est représenté en hachures sur la figure 1.

Comme évoqué précédemment, ces fonctions permettent au module d'accéder au paquet de données lorsqu'ils se présentent à une interface H_{IN}, H_{OUT} de la pile protocolaire PS.

Les détails de la librairie « libipq » sont exposés dans différentes documentations accessibles à l'homme du métier dont les « pages manuels » des systèmes d'exploitation (« *manpages* »).

Sans entrer dans tous ces détails, la fonction « ipq_read() » permet à chaque module extérieur d'attendre l'arrivée d'un paquet de données sur l'interface. La fonction « ipq_get_packet() » permet ensuite de lire ce paquet de données, c'est-à-dire le copier dans une zone mémoire réservée pour le module extérieur. Celui-ci peut alors lire chacune des informations contenues dans le paquet de données.

Il peut alors sélectionner les paquets du protocole NDP des autres paquets de données, et il peut analyser et éventuellement modifier les paquets de données sélectionnés, conformément au mécanisme SEND.

Cette sélection et cette analyse seront vues plus en détails plus loin, mais il est ici important de savoir que, le cas échéant, la zone mémoire dans laquelle le paquet de données a été copiée peut être modifiée pour refléter ce traitement.

Une fois ceux-ci effectuée, le module extérieur peut utiliser la fonction « ipq_set verdict() ». Cette fonction avec l'argument « ACCEPT » ou « MODIFIED » permet de remettre, respectivement intact ou modifié, le paquet de données dans la pile protocolaire PS par l'interface H_{IN}, H_{OUT} concernée. Ce paquet de données est une copie de la zone mémoire dans laquelle il avait été précédemment copié.

De cette façon, les modules extérieurs peuvent modifier (argument « MODIFIED ») les paquets de données transmis par la pile protocolaire PS de façon transparente pour celle-ci.

La sélection des paquets du protocole NDP peut être effectuée en fonction des spécifications du protocole NDP (« *Neighbor Discovery Protocol* ») défini par le RFC 2461.

La figure 3 schématise le format d'un paquet de données. Il comporte un entête « IP Header », ainsi qu'évoqué précédemment. Ensuite vient un second « entête », ND, constitué de champs propres au protocole NDP. Ce protocole défini 5 types de paquets de données : « *Neighbor Solicitation* », « *Neibhbor Advertisement* », « *Router Solicitation* », « *Router Advertisement* », « *Redirect* ».

Il est possible de sélectionner les paquets conformes au protocole NDP par l'analyse de cet entête « ND ». Ainsi que décrit dans la section 4 du RFC 2461, que l'entête ND commence par un champ « type » définissant le type de paquet de données selon le tableau suivant :

| Type de paquet | Valeur du champ « Type » |
|---|---|
| « *Neighbor Solicitation* » | 135 |
| « *Neibhbor Advertisement* » | 136 |
| « *Router Solicitation* » | 133 |
| « *Router Advertisement* » | 134 |
| « *Redirect* » | 137 |

Les paquets conformes au protocole NDP possèdent en outre une plage de contenu qui est utilisé par le mécanisme SEND pour y insérer des options. Le mécanisme SEND prévoit notamment deux options : l'option RSA (ou plus exactement « RSA signature ») et l'option CGA. Deux autres options - non représentées sur la figure - sont également prévues : l'option « *TimeStamp* » et l'option « *Nonce* ».

L'option CGA permet de transmettre des informations liées à la technique CGA (pour « Cryptographically Generated Address » en langue anglaise). Cette technique est décrite dans le RFC 3972 datant de mars 2005 et elle consiste à générer l'adresse IPv6 d'un noeud de réseau en utilisant une fonction de hachage irréversible à partir d'au moins la clé publique de ce noeud.

L'option « RSA » permet d'attacher aux paquets de données NDP des signatures basés sur une clé publique

Ces options ne sont pas indépendantes les unes des autres. Par exemple, si les options « CGA » et « RSA signature » sont présents, alors il faut que la clé publique déterminée à partir de l'option « CGA » soit celle transmise dans le champ « *Key Hash* » de l'option « RSA signature ». Si tel n'est pas le cas, le paquet doit être supprimé.

De nombreuses règles de traitement doivent ainsi être appliquées par l'équipement de communication, que ce soit pour émettre des paquets NDP ou lorsqu'il en reçoit.

Le rôle des modules extérieurs M_{IN} et M_{OUT} est alors d'appliquer ces règles de traitement pour les second et premier cas respectivement. Ils peuvent remplir ce rôle de façon entièrement transparente pour le noyau d'exploitation. Il s'agit donc d'une part d'analyser les paquets de données NDP (principalement pour M_{IN}) afin de s'assurer qu'ils respectent le mécanisme SEND, et d'autre part de modifier les paquets de données NDP (principalement pour M_{OUT}) afin de les rendre conforme au mécanisme SEND.

Si une nouvelle version du code de traitement du mécanisme SEND est disponible, il suffit alors d'incorporer ce code dans ces modules extérieurs sans pour autant modifier le noyau lui-même. De même, si le mécanisme SEND évolue et défini de nouvelles options, il suffit là aussi d'incorporer le code relatif à ces évolutions dans les modules extérieurs sans toucher au noyau d'exploitation.

Dans la situation où le noyau du système d'exploitation ne dispose pas d'infrastructure similaire à l'infrastructure « NetFilter », c'est-à-dire présentant des interfaces associées à des points déterminés, il demeure possible de mettre en oeuvre l'invention dans un mode « dégradé ». En effet, il est possible de regarder les paquets avant leur entrée dans la pile protocolaire et à leur sortie. Des modules logiciels M_{IN}, M_{OUT} peuvent donc être connectés à l'entrée et à la sortie de cette pile protocolaire de façon à modifier, le cas échéant, les paquets correspondant au protocole NDP conformément au mécanisme SEND.

## Revendications

1. Procédé de sécurisation d'un équipement de communication (E) comportant un noyau (K) de système d'exploitation et un ensemble d'applications logicielles (A), ledit noyau comprenant au moins une pile protocolaire IPv6 (PS) permettant de transmettre des paquets de données entrants depuis un port d'entrée (P_{IN}) vers une application (A) et des paquets de données sortants depuis une application (A) vers un port de sortie (P_{OUT}) lesdites piles protocolaires comprenant un ensemble d'interfaces (H_{PRE}, H_{IN}, H_{OUT}, H_{POST}) prévues pour permettre à des modules extérieurs connectés à celles-ci d'accéder auxdits paquets de données transmis par ladite au moins une pile protocolaire en des points déterminés associés auxdites interfaces, ledit procédé **se caractérisant en ce que** l'on connecte des modules d'entrée (M_{IN}) et de sortie (M_{OUT}) respectivement à une interface d'entrée (H_{IN}) et à une interface de sortie (H_{OUT}) dudit noyau (K), et **en ce que** lesdits modules sélectionnent, analysent et éventuellement modifient les paquets de données du protocole NDP, conformément au mécanisme SEND, de façon transparente pour ledit noyau.

2. Procédé de sécurisation selon la revendication précédente dans lequel ledit système d'exploitation est un système Linux et lesdits points déterminés, définis selon l'infrastructure « NetFilter ».

3. Procédé de sécurisation selon l'une des revendications précédentes, dans lequel lesdits modules extérieurs analysent et modifient les options « CGA option » et « RSA signature » desdits paquets de données du protocole NDP.

4. Procédé de sécurisation selon la revendication 1, dans lequel lesdits points déterminés sont situés à l'entrée et à la sortie de ladite pile protocolaire (PS).

5. Équipement de communication (E), comportant un noyau (K) de système d'exploitation et un ensemble d'applications logicielles (A), ledit noyau comprenant au moins une pile protocolaire IPv6 (PS) permettant de transmettre des paquets de données entrants depuis un port d'entrée (P_{IN}) vers une application (A) et des paquets de données sortants depuis une application (A) vers un port de sortie (P_{OUT}), lesdites piles protocolaires comprenant un ensemble d'interfaces (H_{PRE}, H_{IN}, H_{OUT}, H_{POST}) prévues pour permettre à des modules extérieurs connectés à celles-ci d'accéder auxdits paquets de données transmis par ladite au moins une pile protocolaire en des points déterminés associés auxdites interfaces, **caractérisé en ce que** des modules d'entrée (M_{IN}) et de sortie (M_{OUT}) sont connectés respectivement à une interface d'entrée (H_{IN}) et à une interface de sortie (H_{OUT}) et sont prévus pour sélectionner, analyser et modifier les paquets de données du protocole NDP, conformément au mécanisme SEND, de façon transparente pour ledit noyau.

6. Équipement de communication selon la revendication précédente dans lequel ledit système d'exploitation est un système Linux et lesdits points déterminés, définis selon l'infrastructure « NetFilter ».

7. Équipement de communication selon l'une des revendications 5 ou 6, dans lequel lesdits modules extérieurs analysent et modifient les options « CGA option » et « RSA signature » desdits paquets de données du protocole NDP.

8. Équipement de communication selon la revendication 5, dans lequel lesdits points déterminés sont situés à l'entrée et à la sortie de ladite pile protocolaire (PS).

## Claims

1. A security-procuring method for making a communications device (D) secure, said communications device comprising an operating system kernel (K) and a set of software applications (A), said kernel including at least one IPv6 protocol stack (PS) making it possible to transmit incoming data packets from an input port (P_{IN}) to an application (A) and to transmit outgoing data packets from an application (A) to an output port (P_{OUT}), said protocol stacks including a set of interfaces (H_{PRE}, H_{IN}, H_{OUT}, H_{POST}) designed to enable external modules connected to them to access said data packets transmitted by said at least one protocol stack at determined points associated with said interfaces, said method being **characterized in that** an input module (M_{IN}) and an output module (M_{OUT}) are connected respectively to an input interface (H_{IN}) and to an output interface (H_{OUT}) of said kernel (K), and **in that** said modules select, analyze, and, if necessary, modify the data packets of the Network Discovery Protocol (NDP), in compliance with the Secure Neighbor Discovery (SEND) mechanism, in a manner that is transparent for said kernel.

2. A security-procuring method according to claim 1, wherein said operating system is a Linux system, and said determined points are defined in compliance with the "NetFilter" infrastructure.

3. A security-procuring method according to claim 1, wherein said external modules analyze and modify the "CGA" and the "RSA signature" options of said data packets of the NDP.

4. A security-procuring method according to claim 1, wherein said determined points are situated at the input and at the output of said protocol stack (PS).

5. A communication device (D) comprising an operating system kernel (K) and a set of software applications (A), said kernel including at least one IPv6 protocol stack (PS) making it possible to transmit incoming data packets from an input port (P_{IN}) to an application (A) and to transmit outgoing data packets from an application (A) to an output port (P_{OUT}), said protocol stacks comprising a set of interfaces (H_{PRE}, H_{IN}, H_{OUT}, H_{POST}) designed to enable external modules connected to them to access said data packets transmitted by said at least one protocol stack at determined points associated with said interfaces, said communications device being **characterized in that** an input module (M_{IN}) and an output module (M_{OUT}) are connected respectively to an input interface (H_{IN}) and to an output interface (H_{OUT}), and are suitable for selecting, analyzing, and, if necessary, modifying the data packets of the NDP, in compliance with the SEND mechanism, in a manner that is transparent for said kernel.

6. A communication device according to claim 5, wherein said operating system is a Linux system, and said determined points are defined in compliance with the "NetFilter" infrastructure.

7. A communication device according to claim 5 or 6, wherein said external modules analyze and modify the "CGA" and "RSA signature" options of said data packets of the NDP.

8. A communication device according to claim 6, wherein said determined points are situated at the input and at the output of said protocol stack (PS).

## Patentansprüche

1. Verfahren zur Sicherung eines Kommunikationsgeräts (E), das einen Betriebssystemkern (K) und einen Komplex logischer Anwendungen (A) einschließt, wobei dieser Kern mindestens einen Protokollstapel IPv6 (PS) enthält, der es ermöglicht, eingehende Datenpakete von einem Eingangsport (P_{IN}) aus zu einer Anwendung (A) zu übertragen und ausgehende Datenpakete von einer Anwendung (A) aus zu einem Ausgangsport (P_{OUT}) zu übertragen, wobei diese Protokollstapel einen Komplex von Schnittstellen (H_{PRE}, H_{IN}, H_{OUT}, H_{POST}) einschließen, die dafür vorgesehen sind, es externen Modulen, die an jene angeschlossen sind, zu ermöglichen, auf diese Datenpakete, die durch diesen mindestens einen Protokollstapel übertragen werden, an bestimmten Punkten zuzugreifen, welche mit diesen Schnittstellen verknüpft sind, wobei dieses Verfahren **dadurch gekennzeichnet ist, dass** man Eingangsmodule (M_{IN}) und Ausgangsmodule (M_{OUT}) mit einer Eingangsschnittselle (H_{IN}) beziehungsweise einer Ausgangsschnittstelle (H_{OUT}) dieses Kerns (K) verbindet, und **dadurch gekennzeichnet, dass** diese Module die Datenpakete des Protokolls NDP auswählen, analysieren und eventuell modifizieren, gemäß dem Mechanismus SEND, und zwar für diesen Kern transparent.

2. Sicherungsverfahren gemäß dem vorstehenden Anspruch, bei dem dieses Betriebssystem ein Linux-System ist und diese bestimmten Punkte gemäß der Infrastruktur "NetFilter" definiert werden.

3. Sicherungsverfahren gemäß einem der vorstehenden Ansprüche, bei dem diese externen Module die Optionen "CGA option" und "RSA signature" dieser Datenpakete des NDP-Protokolls analysieren und modifizieren.

4. Sicherungsverfahren gemäß Anspruch 1, bei dem diese bestimmten Punkte am Eingang und am Ausgang dieses Protokollstapels (PS) gelegen sind.

5. Kommunikationsgerät (E), das einen Betriebssystemkern (K) und einen Komplex Softwareanwendungen (A) einschließt, wobei dieser Kern mindestens einen Protokollstapel IPv6 (PS) enthält, der es ermöglicht, eingehende Datenpakete von einem Eingangsport (P_{IN}) aus zu einer Anwendung (A) zu übertragen und ausgehende Datenpakete von einer Anwendung (A) aus zu einem Ausgangsport (P_{OUT}) zu übertragen, wobei diese Protokollstapel einen Komplex von Schnittstellen (H_{PRE}, H_{IN}, H_{OUT}, H_{POST}) einschließen, die dafür vorgesehen sind, es externen Modulen, die an jene angeschlossen sind, zu ermöglichen, auf diese Datenpakete, die durch diesen mindestens einen Protokollstapel übertragen werden, an bestimmten Punkten zuzugreifen, welche mit diesen Schnittstellen verknüpft sind, **dadurch gekennzeichnet, dass** Eingangsmodule (M_{IN}) und Ausgangsmodule (M_{OUT}) mit einer Eingangsschnittselle (H_{IN}) beziehungsweise einer Ausgangsschnittstelle (H_{OUT}) dieses Kerns (K) verbunden sind, und dafür vorgesehen sind, die Datenpakete des Protokolls NDP auszuwählen, zu analysieren und zu modifizieren, gemäß dem Mechanismus SEND, und zwar für diesen Kern transparent.

6. Kommunikationsgerät gemäß dem vorstehenden Anspruch, bei dem dieses Betriebssystem ein Linux-System ist und diese bestimmten Punkte gemäß der Infrastruktur "NetFilter" definiert werden.

7. Kommunikationsgerät gemäß einem der Ansprüche 5 oder 6, bei dem diese externen Module die Optionen "CGA option" und "RSA signature" dieser Datenpakete des Protokolls NDP analysieren und modifizieren.

8. Kommunikationsgerät gemäß Anspruch 5, bei dem diese bestimmten Punkte am Eingang und am Ausgang dieses Protokollstapels (PS) gelegen sind.
